# DEMANDE DE BREVET EUROPEEN

(11) **EP 1 333 038 A1**
(43) Date de publication de la demande: **06.08.2003**
(21) Numéro de dépôt: 02075606.0
(22) Date de dépôt: 04.02.2002
(51) Int. Cl.: C08F 10/02, C08F 4/602, C08F 4/70

(54) **Procédé pour la polymérisation des alpha-oléfines**

(71) Demandeur: SOLVAY POLYOLEFINS EUROPE - BELGIUM (Société Anonyme), 1050 Bruxelles (BE)
(72) Inventeur: Francois, Philippe, 1490 Court-Saint-Etienne (BE); Radhakrishnan, Karunakaran, University Minnesota, Minneapolis, MN 55455 (US); Cramail, Henri, 33350 Sainte Terre (FR); Deffieux, Alain, 33000 Bordeaux (FR)
(74) Mandataire: Smith, Julian Philip Howard

(57) **Abrégé**

Procédé de polymérisation des alpha-oléfines dans lequel on met en contact, dans des conditions polymérisantes, au moins une alpha-oléfine avec un système catalytique comprenant
- au moins un complexe catalytique (a) à base d'un métal (M) des groupes 6 à 12 du Tableau Périodique,
- au moins un trialkylaluminium (b) répondant à la formule générale AlR₃, dans laquelle chaque R représente, de manière indépendante, un groupe alkyle linéaire contenant de 1 à 30 atomes de carbone,
- au moins un trialkylaluminium (c) répondant à la formule générale AlR'₃, dans laquelle chaque R' représente, de manière indépendante, un groupe alkyle ramifié contenant de 3 à 30 atomes de carbone,
tel que le rapport molaire du trialkylaluminium (c) au trialkylaluminium (b) est d'au moins 2.

## Description

La présente invention concerne un procédé pour la polymérisation des alpha-oléfines.

Il est connu de polymériser les alpha-oléfines au moyen de systèmes catalytiques comprenant un complexe d'un métal de transition avec un ligand bi-ou tridentate, et un aluminoxane. La demande de brevet WO 98/27124 décrit un procédé de polymérisation de l'éthylène au moyen d'un système catalytique comprenant un complexe catalytique à base de fer ou de cobalt avec des pyridinebis-(imines) et du méthylaluminoxane. L'utilisation d'un aluminoxane conduit à des activités élevées et des distributions des poids moléculaires très larges, avec une fraction de très bas poids moléculaires. En outre, les aluminoxanes se présentent sous forme d'oligomères collants et sont difficiles à manipuler et à synthétiser. De plus, les aluminoxanes commercialement disponibles ont une pureté très variable et sont relativement coûteux et instables.

Il est également connu de polymériser les alpha-oléfines au moyen de systèmes catalytiques comprenant un complexe d'un métal de transition avec un ligand bi- ou tridentate, et un trialkylaluminium. La demande de brevet EP 1054022 ainsi que Kumar et al. (Macromol. Chem. Phys., 2000, 201 (13), 1513) décrivent la polymérisation de l'éthylène à l'aide des catalyseurs à base de fer ayant des ligands de type bis-(imino)pyridine ou à base de nickel ayant des ligands de type di-imine en présence de triméthylaluminium (TMA) ou de triisobutylaluminium (TIBAL). De tels systèmes catalytiques présentent une activité modérée, plus particulièrement à des températures de polymérisation supérieures à la température ambiante. En outre, l'utilisation de TMA conduit à une distribution des poids moléculaires très large.

On a maintenant trouvé un procédé de polymérisation des alpha-oléfines au moyen d'un système catalytique à base d'un catalyseur comprenant un complexe d'un métal des groupes 6 à 12 qui ne présente pas les inconvénients précités.

A cet effet, la présente invention concerne un procédé de polymérisation des alpha-oléfines dans lequel on met en contact, dans des conditions polymérisantes, au moins une alpha-oléfine avec un système catalytique comprenant
- au moins un complexe catalytique (a) à base d'un métal (M) des groupes 6 à 12 du Tableau Périodique,
- au moins un trialkylaluminium (b) répondant à la formule générale AlR₃, dans laquelle chaque R représente, de manière indépendante, un groupe alkyle linéaire contenant de 1 à 30 atomes de carbone,
- au moins un trialkylaluminium (c) répondant à la formule générale AlR'₃, dans laquelle chaque R' représente, de manière indépendante, un groupe alkyle ramifié contenant de 3 à 30 atomes de carbone, tel que le rapport molaire du trialkylaluminium (c) au trialkylaluminium (b) est d'au moins 2.

Toutes les références au Tableau Périodique des Eléments réfèrent à la version publiée dans CRC Handbook of Chemistry and Physics, 77th Edition, 1996/97; la notation utilisée est la nouvelle notation des groupes par IUPAC.

Dans la présente invention, on entend désigner par alpha-oléfines, les oléfines à insaturation terminale contenant de 2 à 20, de préférence de 2 à 8, atomes de carbone, telles que, notamment, l'éthylène, le propylène, le 1-butène, le 1-méthyl-pentène, le 1-hexène, le 1-octène. Il va de soi que, outre l'alphaoléfine, un autre monomère copolymérisable avec l'alpha-oléfine peut être mis en oeuvre dans le procédé selon l'invention.

Les complexes catalytiques (a) mis en oeuvre dans la présente invention sont en général choisis parmi ceux contenant au moins deux hétéroatomes et plus particulièrement parmi ceux représentés par la formule (I) 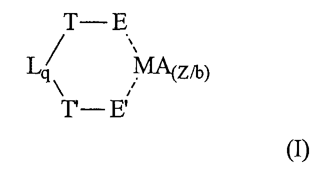 dans laquelle
- M est un métal des groupes 6 à 12 du Tableau Périodique,
- E et E' sont des groupes donneurs d'électrons contenant un atome du groupe 15; E et E' peuvent être différents ou identiques,
- L est un groupe donneur d'électrons contenant un atome du groupe 14 à 16 ou un noyau aromatique hydrocarboné; L peut être différent de ou identique à E et/ou E',
- T et T' représentent de façon indépendante, des ponts saturés ou insaturés contenant des éléments des groupes 14 à 16,
- chaque A représente, de manière indépendante, un atome ou un groupe d'atomes, lié au métal M de manière covalente ou ionique,
- Z est l'état d'oxydation de M,
- b est la valence de A,
- q est 1 ou 0.

Les complexes catalytiques (a) préférés sont ceux dans lesquels le métal (M) est choisi parmi les métaux des groupes 6 à 10. Les complexes catalytiques (a) préférés sont ceux dans lesquels A est un atome d'halogène, un alkoxyde, un aryloxyde, une amine, une phosphine, un hydrure ou un groupe hydrocarboné, éventuellement substitué et/ou halogéné.

Les complexes catalytiques (a) mis en oeuvre dans la présente invention peuvent éventuellement être complexés par un ou plusieurs groupes donneur d'électrons.

Les complexes catalytiques (a) mis en oeuvre dans le procédé selon l'invention sont avantageusement choisis parmi les complexes répondant à la formule générale (II) 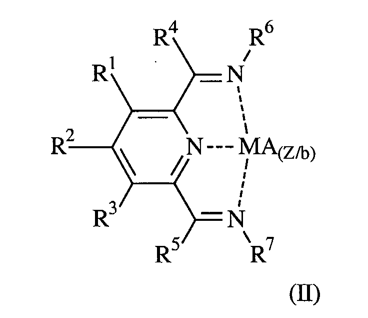 dans laquelle
- M, A, Z et b sont tels que définis pour la formule (I),
- R¹, R², R³, R⁴ et R⁵ représentent chacun, de manière indépendante, un atome d'hydrogène, un groupe hydrocarboné éventuellement substitué, un groupe hétérohydrocarboné éventuellement substitué ou un groupe fonctionnel inerte,
- R⁶ et R⁷ représentent chacun, de manière indépendante, un groupe aryle, éventuellement substitué.

Par groupe fonctionnel inerte, on entend désigner dans le cadre de la présente invention un atome ou un groupe d'atomes qui n'interfère pas dans les conditions du procédé selon la présente invention, et qui ne coordonne pas avec le métal (M). A titre d'exemples de groupes fonctionnels inertes, on peut citer les atomes d'halogène et les éthers de formule -OQ dans laquelle Q est un groupe hydrocarboné, éventuellement substitué.

Préférés sont les complexes catalytiques représentés par la formule (II) dans laquelle
R⁶ est un groupe aryle répondant à la formule générale 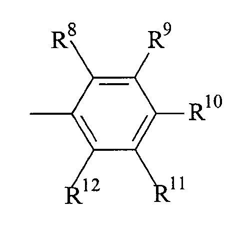
et R⁷ est un groupe aryle répondant à la formule générale 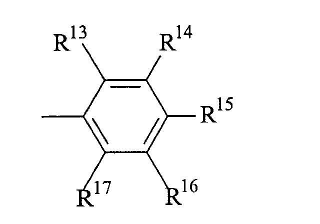
dans lesquelles
- R⁸ et R¹³ représentent chacun, de manière indépendante, un groupe hydrocarboné éventuellement substitué, un groupe hétérohydrocarboné éventuellement substitué ou un groupe fonctionnel inerte,
- R⁹, R¹⁰, R¹¹, R¹², R¹⁴, R¹⁵, R¹⁶ et R¹⁷ représentent chacun, de manière indépendante, un atome d'hydrogène, un groupe hydrocarboné éventuellement substitué, un groupe hétérohydrocarboné éventuellement substitué ou un groupe fonctionnel inerte,
- les groupes R⁸, R⁹, R¹⁰, R¹¹, R¹², R¹³, R¹⁴, R¹⁵, R¹⁶ et R¹⁷ qui sont adjacents pouvant être reliés l'un à l'autre de manière à former un cycle.

De tels complexes catalytiques ont notamment été décrits dans la demande de brevet WO 98/27124.

Les complexes catalytiques (a) particulièrement préférés sont ceux répondant à la formule (II) dans lesquels le métal (M) est choisi parmi les métaux des groupes 6 à 9, et plus particulièrement parmi le fer, le chrome ou le cobalt. Avantageusement, A est un atome d'halogène, plus particulièrement un atome de chlore.

De bons résultats ont été obtenus avec des complexes catalytiques (a) répondant à la formule (II) dans laquelle
- M est un atome de Fe,
- A est un atome de Cl,
- bestégalàl,
- Z est égal à 2,
- R¹, R² et R³ sont des atomes d'hydrogène,
- R⁴ et R⁵ sont chacun, de manière indépendante, un atome d'hydrogène ou un groupe alkyle comprenant de 1 à 6 atomes de carbone,
- R⁶ est un groupe aryle de formule 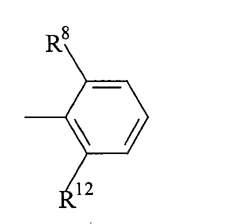
- R⁷ est un groupe aryle de formule 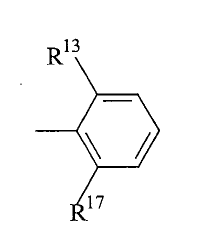
dans lesquelles R⁸ et R¹³ sont un groupe alkyle comprenant au plus 4 atomes de carbone, et R¹² et R¹⁷ sont un atome d'hydrogène ou un groupe alkyle comprenant au plus 4 atomes de carbone.

Les trialkylaluminiums (b) de formule AlR₃ mis en oeuvre dans le procédé selon l'invention sont en général choisis parmi ceux dans lesquels chaque R représente, de manière indépendante, un groupe alkyle linéaire contenant de 1 à 18 atomes de carbone. Ils sont de préférence choisis parmi ceux dans lesquels chaque R représente, de manière indépendante, un groupe alkyle linéaire contenant de 1 à 12 atomes de carbone, plus particulièrement parmi ceux contenant de 1 à 10 atomes de carbone. Les trialkylaluminiums (b) dans lesquels chaque R est identique sont très particulièrement préférés. A titre d'exemples de tels trialkylaluminiums (b) on peut citer le triméthylaluminium (TMA), le triéthylaluminium (TEA), le tri-n-propylaluminium, le tri-n-butylaluminium, le tri-n-hexylaluminum (THA), le tri-n-octylaluminium. Le TMA a donné des résultats particulièrement bons.

Les trialkylaluminiums (c) de formule AlR'₃ mis en oeuvre dans le procédé selon l'invention sont en général choisis parmi ceux dans lesquels chaque R' représente, de manière indépendante, un groupe alkyle ramifié contenant de 3 à 18 atomes de carbone. Ils sont de préférence choisis parmi ceux dans lesquels chaque R' représente, de manière indépendante, un groupe alkyle ramifié contenant de 3 à 12 atomes de carbone, plus particulièrement parmi ceux contenant de 3 à 10 atomes de carbone. Les trialkylaluminiums (c) dans lesquels chaque R' est identique sont très particulièrement préférés. A titre d'exemples de tels trialkylaluminiums (c) on peut citer le triisopropylaluminium, le triisobutylaluminium (TIBAL), le tri-tertiair-butylaluminium. Le TIBAL a donné des résultats particulièrement bons.

Le système catalytique mis en oeuvre dans le procédé selon l'invention est substantiellement exempt d'aluminoxanes. Avantageusement, il ne comprend pas d'agents ionisants tels que le tétrakis(pentafluorophényl)borate de triphénylcarbénium, le tétrakis(pentafluorophényl)borate de N,N-diméthylanilium, le tétrakis(pentafluorophényl)borate de tri(n-butyl)-ammonium, le tri(pentafluorophényl)bore, le triphénylbore, le triméthylbore, le tri(triméthylsilyl)bore et les organoboroxines. Le système catalytique mis en oeuvre dans le procédé selon l'invention peut éventuellement contenir d'autres composés organoaluminium différents du trialkylaluminium (b), du trialkylaluminium (c) et d'un aluminoxane.

Les quantités de trialkylaluminium (b) et de trialkylaluminium (c) mises en oeuvre dans le procédé selon l'invention sont telles que le rapport molaire du trialkylaluminium (c) au trialkylaluminium (b) est d'au moins 2, avantageusement d'au moins 2,5. Des rapports molaires d'au moins 3 sont particulièrement préférés parce qu'ils permettent d'atteindre des activités élevées et des distributions des poids moléculaires étroites, le plus souvent inférieures à 5. La méthode de mesure de la distribution des poids moléculaires est expliquée ci-après en rapport avec les exemples. Généralement, le rapport molaire du trialkylaluminium (c) au trialkylaluminium (b) est d'au plus 20, avantageusement d'au plus 10.

Les quantités de trialkylaluminium (b) et trialkylaluminium (c) mises en oeuvre dans le procédé selon l'invention sont telles que le rapport atomique de l'aluminium provenant du trialkylaluminium (b) et du trialkylaluminium (c) au métal (M) provenant du complexe catalytique (a) est de 1 à 20000. De préférence, ce rapport est d'au moins 2. Le plus souvent, les quantités totales d'alkylaluminiums (b) et (c) mises en oeuvre sont telles que le rapport atomique de l'aluminium au métal (M) est d'au plus 15000, plus particulièrement d'au plus 10000.

Dans le procédé selon l'invention, les trialkylaluminiums (b) et (c) peuvent être mis en contact ensemble au préalable, en alternative en présence d'un diluant et/ou d'un solvant. Dans le procédé selon l'invention, les trialkylaluminiums (b) et (c) peuvent être mis en contact avec l'alpha-oléfine dans le réacteur de polymérisation, avant d'y ajouter le complexe catalytique (a). En alternative, seulement une partie des trialkylaluminiums (b) et (c) est mise en contact avec l'alpha-oléfine dans le réacteur de polymérisation; l'autre partie est utilisée pour effectuer un prémélange avec le complexe catalytique (a). Une variante consiste à utiliser seulement le trialkylaluminium (b) ou une partie du trialkylaluminium (b) pour effectuer un prémélange avec le complexe catalytique (a), et seulement le trialkylaluminium (c) ou une partie du trialkylaluminium (c) pour le précontact avec l'alpha-oléfine dans le réacteur de polymérisation. En alternative, on utilise seulement le trialkylaluminium (c) ou une partie du trialkylaluminium (c) pour effectuer un prémélange avec le complexe catalytique (a), et seulement le trialkylaluminium (b) ou une partie du trialkylaluminium (b) pour le précontact avec l'alpha-oléfine dans le réacteur de polymérisation. Une autre possibilité est d'effectuer un prémélange du complexe catalytique (a) avec les trialkylaluminiums (b) et (c), puis de le mettre dans le réacteur de polymérisation en présence de l'alpha-oléfine.

Le procédé de polymérisation selon l'invention peut être réalisé en continu ou en discontinu, selon n'importe quel procédé connu, notamment en solution ou en suspension dans un diluant hydrocarboné, en suspension dans le monomère, ou un des monomères, maintenu à l'état liquide ou encore en phase gazeuse.

De manière optionnelle, le procédé de polymérisation selon l'invention peut être effectué en présence d'un ou plusieurs agents de réglage de la masse moléculaire des polyoléfines tels que l'hydrogène. Le procédé selon l'invention peut également être effectué en ajoutant un ou plusieurs agents anti-croûtage et/ou un ou plusieurs agents capteurs de poison tels que les dérivés organiques de lithium, magnésium, zinc, aluminium ou étain.

La température à laquelle est effectué le procédé de polymérisation selon l'invention est généralement de -50 °C à + 300 °C, le plus souvent de -20 à 130 °C. La température de polymérisation est de préférence d'au moins 30 °C. De manière préférée, elle ne dépasse pas 115 °C.

La pression totale à laquelle est effectué le procédé selon l'invention est en général de 1 10⁵ à 100 10⁵ Pa, plus particulièrement de 1 10⁵ à 55 10⁵ Pa.

Le procédé de polymérisation selon l'invention est avantageusement appliqué à la fabrication de polymères d'éthylène, et plus particulièrement, à la fabrication d'homo- et de copolymères de l'éthylène comprenant au moins 90 moles % d'unités dérivées de l'éthylène. Les copolymères préférés sont ceux de l'éthylène et d'une autre alpha-oléfine comprenant de 3 à 8 atomes de carbone. Particulièrement préférés sont les copolymères de l'éthylène et du 1-butène et/ou du 1-hexène. Dans ce cas, le procédé de polymérisation est de préférence réalisé en suspension dans un diluant hydrocarboné. Le diluant hydrocarboné est généralement choisi parmi les hydrocarbures aliphatiques contenant de 3 à 10 atomes de carbone. De préférence, le diluant est choisi parmi le propane, l'isobutane, l'hexane ou leurs mélanges.

Le procédé selon l'invention permet d'obtenir des polymères d'alphaoléfines avec des activités élevées, en général au moins équivalentes à celles obtenues en utilisant des aluminoxanes. Le procédé selon l'invention permet en général d'obtenir des activités catalytiques élevées, même en utilisant des rapports atomiques de l'aluminium au métal (M) inférieurs à ceux utilisés généralement avec des aluminoxanes. Le procédé selon l'invention permet également d'obtenir des polymères d'alpha-oléfines ayant des distributions des poids moléculaires étroites, en général inférieures à 5.

Les exemples suivants servent à illustrer l'invention. Les méthodes de mesure des grandeurs mentionnées dans les exemples, et la signification des symboles utilisés dans ces exemples sont explicitées ci-dessous.

Les poids moléculaires moyennes en nombre (Mₙ) et en poids (M_{w}) sont obtenues par chromatographie d'exclusion stérique à partir d'une solution de polymère dans le trichlorobenzène à 0,5 g/l, au moyen d'une colonne polystyrénique telle que la colonne Waters STYRAGEL® HMW 6E commercialisée par Waters Co Ltd. La distribution des poids moléculaires (DPM) est caractérisée par le rapport de M_{w}/Mₙ.

L'activité catalytique est caractérisée par la quantité de polymère formée lors des essais de polymérisation et est exprimée en kg de polymère par mole de métal (M) mis en oeuvre, par heure de polymérisation et par 10⁵ Pa.

### Exemples 1 à 3

Dans un autoclave de 300 ml, préalablement conditionné sous azote, ont été ajoutés 100 ml de toluène. L'autoclave a été porté à 30°C et tiré sous vide durant 5 minutes. On y a ajouté ensuite l'éthylène jusqu'à obtenir une pression de 1 10⁵ Pa. Les quantités nécessaires de trialkylaluminium (b) et (c) pour atteindre le rapport atomique Al/Fe indiqué dans le tableau 1 ont été introduites dans le réacteur.

Ce mélange a ensuite été agité avant de démarrer la polymérisation par l'introduction de 0,8x10⁻³ mmole du complexe catalytique suivant

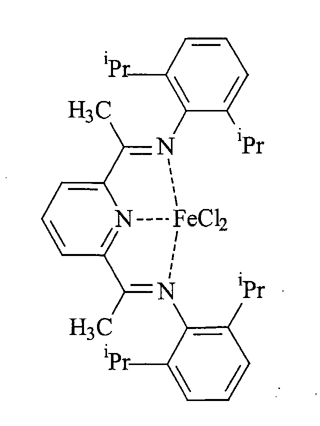

La température et la pression ont été maintenues constantes pendant une heure. La polymérisation a été arrêtée par dégazage de l'éthylène. Le contenu du réacteur a été vidé dans un becher contenant 100 ml de méthanol. Dans le réacteur, 300 ml de toluène ont été ajoutés et agités pendant 2 heures à 100 °C sous 5 10⁵ Pa d'azote afin d'y dissoudre le polymère restant dans le réacteur. Ce toluène a alors été ajouté au même becher. Un large excès d'acétone et 5 ml d'HCl concentré dilué dans 50 ml d'eau ont été ajoutés dans ,les 600 ml de toluène afin d'y précipiter le polymère et de détruire le catalyseur et les cocatalyseurs présents. Le polymère précipité a été filtré et séché jusqu'à poids constant.

Les résultats obtenus se trouvent dans le tableau 1 ci-après.

### Exemple 4R (non conforme à l'invention)

Les opérations de l'exemple 1 ont été répétées sauf que les quantités de TMA (b) et de TIBAL (c) étaient telles que le rapport molaire (c)/(b) était inférieur à 2.

Les résultats obtenus se trouvent dans le tableau 1 ci-après.

La comparaison des résultats obtenus avec ceux des exemples 1 à 3 montre que le procédé selon l'invention mettant en oeuvre un trialkylaluminium (b) et un trialkylaluminium (c) dans un rapport molaire (c)/(b) d'au moins 2, permet d'obtenir des polyéthylènes ayant une DPM étroite.

### Exemple 5R (non conforme à l'invention)

Les opérations de l'exemple 1 ont été répétées sauf que le TMA seul a été utilisé et tel que le rapport atomique Al/Fe était de 1000.

Les résultats obtenus se trouvent dans le tableau 1 ci-après.

La comparaison des résultats obtenus avec ceux des exemples 1 à 3 montre que le procédé selon l'invention mettant en oeuvre un trialkylaluminium (b) et un trialkylaluminium (c) dans un rapport molaire (c)/(b) d'au moins 2, permet d'obtenir, avec une activité catalytique élevée, des polyéthylènes ayant une DPM étroite.

### Exemple 6R (non conforme à l'invention)

Les opérations de l'exemple 1 ont été répétées sauf que le TIBAL seul a été utilisé.

Les résultats obtenus se trouvent dans le tableau 1 ci-après.

La comparaison des résultats obtenus dans les exemples avec ceux des exemples 1 à 3 montre que le procédé selon l'invention mettant en oeuvre un trialkylaluminium (b) et un trialkylaluminium (c) dans un rapport molaire (c)/(b) d'au moins 2, permet d'obtenir une activité catalytique plus élévée par rapport à un système catalytique comprenant le même complexe catalytique et seulement un trialkylaluminium (c).

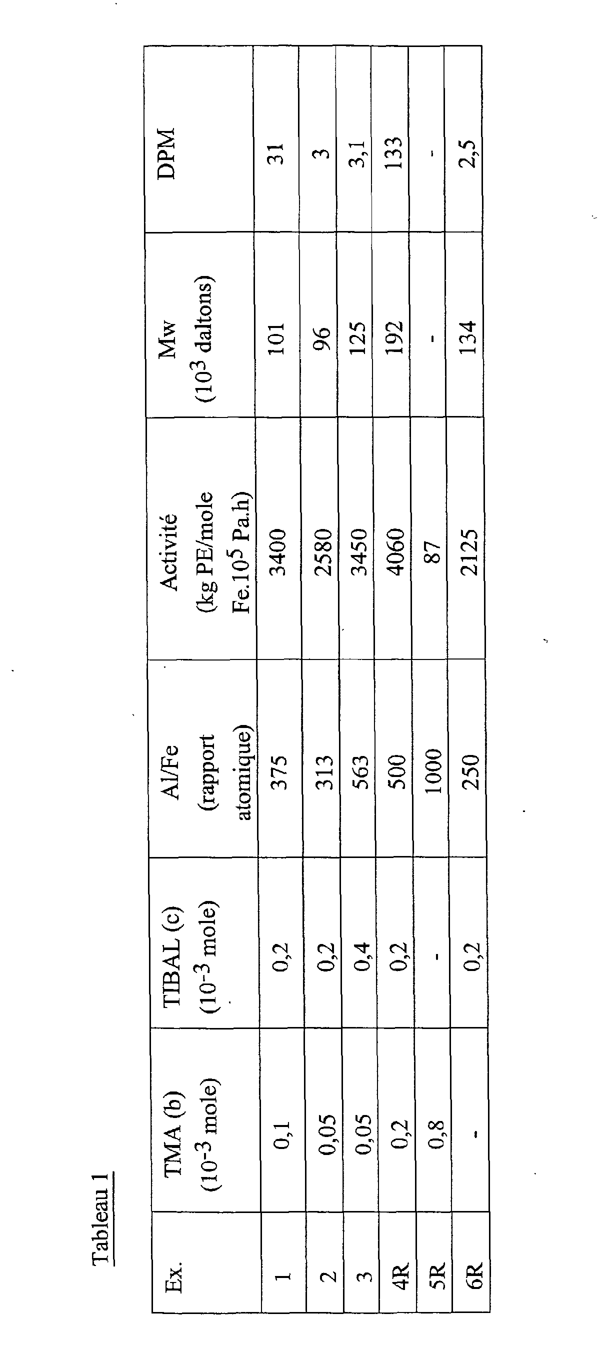

## Revendications

1. Procédé de polymérisation des alpha-oléfines dans lequel on met en contact, dans des conditions polymérisantes, au moins une alpha-oléfine avec un système catalytique comprenant
- au moins un complexe catalytique (a) à base d'un métal (M) des groupes 6 à 12 du Tableau Périodique,
- au moins un trialkylaluminium (b) répondant à la formule générale AlR₃, dans laquelle chaque R représente, de manière indépendante, un groupe alkyle linéaire contenant de 1 à 30 atomes de carbone,
- au moins un trialkylaluminium (c) répondant à la formule générale AlR'₃, dans laquelle chaque R' représente, de manière indépendante, un groupe alkyle ramifié contenant de 3 à 30 atomes de carbone,
tel que le rapport molaire du trialkylaluminium (c) au trialkylaluminium (b) est d'au moins 2.

2. Procédé selon la revendication 1, dans lequel le complexe catalytique (a) répond à la formule générale (II) 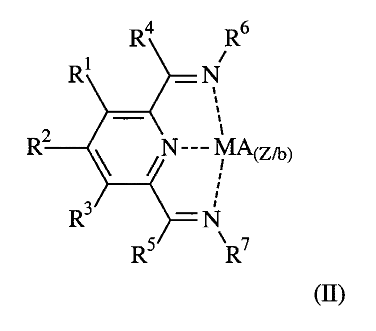 dans laquelle
- M est un métal des groupes 6 à 12 du Tableau Périodique,
- chaque A représente, de manière indépendante, un atome ou un groupe d'atomes, lié au métal M de manière covalente ou ionique,
- Z est l'état d'oxydation de M,
- b est la valence de A,
- R¹, R², R³, R⁴ et R⁵ représentent chacun, de manière indépendante, un atome d'hydrogène, un groupe hydrocarboné éventuellement substitué, un groupe hétérohydrocarboné éventuellement substitué ou un groupe fonctionnel inerte,
- R⁶ et R⁷ représentent chacun, de manière indépendante, un groupe aryle, éventuellement substitué.

3. Procédé selon la revendication 2, dans lequel le complexe catalytique répond à la formule (II) dans laquelle
R⁶ est un groupe aryle de formule générale 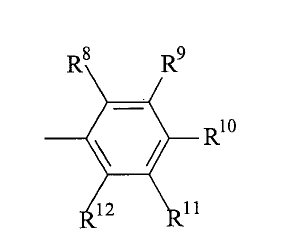
et R⁷ est un groupe aryle de formule générale 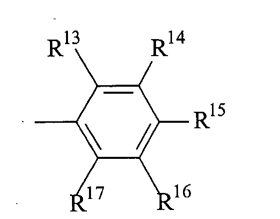
dans lesquelles
- R⁸ et R¹³ représentent chacun, de manière indépendante, un groupe hydrocarboné éventuellement substitué, un groupe hétérohydrocarboné éventuellement substitué ou un groupe fonctionnel inerte,
- R⁹, R¹⁰, R¹¹, R¹², R¹⁴, R¹⁵, R¹⁶ et R¹⁷ représentent chacun, de manière indépendante, un atome d'hydrogène, un groupe hydrocarboné éventuellement substitué, un groupe hétérohydrocarboné éventuellement substitué ou un groupe fonctionnel inerte,
- les groupes R⁸, R⁹, R¹⁰, R¹¹, R¹², R¹³, R¹⁴, R¹⁵, R¹⁶ et R¹⁷ qui sont adjacents pouvant être reliés l'un à l'autre de manière à former un cycle.

4. Procédé selon la revendication 3, dans lequel le complexe catalytique (a) répond à la formule (II) dans laquelle
- M est un atome de Fe,
- A est un atome de Cl,
- b est égal à 1,
- Z est égal à 2,
- R¹, R² et R³ sont des atomes d'hydrogène,
- R⁴ et R⁵ sont chacun, de manière indépendante, un atome d'hydrogène ou un groupe alkyle comprenant de 1 à 6 atomes de carbone,
- R⁶ est un groupe aryle de formule 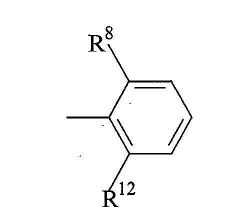
- R⁷ est un groupe aryle de formule 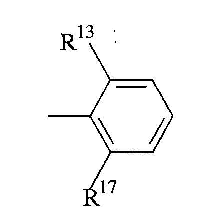
dans lesquelles R⁸ et R¹³ sont un groupe alkyle comprenant au plus 4 atomes de carbone,
et R¹² et R¹⁷ sont un atome d'hydrogène ou un groupe alkyle comprenant au plus 4 atomes de carbone.

5. Procédé selon l'une quelconque des revendications 1 à 4, dans lequel le trialkylaluminium (b) répond à la formule générale AlR₃ dans laquelle chaque R représente, de manière indépendante, un groupe alkyle linéaire contenant de 1 à 10 atomes de carbone.

6. Procédé selon la revendication 5, dans lequel le trialkylaluminium (b) est le triméthylaluminium.

7. Procédé selon l'une quelconque des revendications 1 à 6, dans lequel le trialkylaluminium (c) répond à la formule générale AlR'₃ dans laquelle chaque R' représente, de manière indépendante, un groupe alkyle ramifié contenant de 3 à 10 atomes de carbone.

8. Procédé selon la revendication 7 dans lequel le trialkylaluminium (c) est le triisobutylaluminium.

9. Procédé selon l'une quelconque des revendications 1 à 8, dans lequel le rapport atomique de l'aluminium provenant du trialkylaluminium (b) et du trialkylaluminium (c) au métal (M) provenant du complexe catalytique (a) est de 1 à 20000.

10. Procédé selon l'une quelconque des revendications 1 à 9, dans lequel la polymérisation est effectuée à une température de -50 à 300 °C et sous une pression de 1 10⁵ à 100 10⁵ Pa.

11. Procédé selon l'une quelconque des revendications 1 à 10, appliqué à la fabrication de homo- ou de copolymères de l'éthylène comprenant au moins 90 moles % d'unités dérivées de l'éthylène.
